# EUROPÄISCHE PATENTSCHRIFT

(11) **EP 3 241 794 B1**
(45) Veröffentlichungstag und Bekanntmachung des Hinweises auf die Patenterteilung: **15.04.2020**
(21) Anmeldenummer: 17169377.3
(22) Anmeldetag: 04.05.2017
(51) Int. Cl.: B65H 67/08

(54) **VERFAHREN ZUM HANDHABEN EINES FADENENDES UND SPULSTELLE**
METHOD FOR HANDLING A YARN END AND WINDING STATION
PROCÉDÉ DE MANIPULATION D'UNE EXTRÉMITÉ DE FIL ET POSTE DE BOBINAGE

(30) Priorität: 06.05.2016 DE 102016108423
(43) Veröffentlichungstag der Anmeldung: 08.11.2017
(73) Patentinhaber: Rieter Ingolstadt GmbH, 85055 Ingolstadt (DE)
(72) Erfinder: Stephan, Adalbert, 92339 Beilngries/Paulushofen (DE); Widner, Harald, 85051 Ingolstadt (DE)
(74) Vertreter: Bergmeier, Werner

(56) Entgegenhaltungen:
- EP-A2- 2 444 347
- DE-A1- 4 004 028
- DE-A1-102012 016 854
- JP-A- S5 931 256
- US-A- 3 490 709

## Beschreibung

Die vorliegende Erfindung betrifft ein Verfahren gemäß Oberbegriff des Anspruchs 1.

Ferner betrifft die Erfindung eine Spulstelle einer Kreuzspulen herstellenden Textilmaschine gemäß Oberbegriff des Anspruchs 8.

Kreuzspulen herstellende Textilmaschinen sind wohlbekannt. Sie können als Spinn- oder Spulmaschinen ausgebildet sein. Spinnmaschinen, beispielsweise Rotor- oder Luftspinnmaschinen, stellen dabei einen Faden aus einem Faserverband her. Der hergestellte Faden wird dann von einer Spulstelle der Textilmaschine zu einer Kreuzspule aufgewickelt. Bei einer Spulmaschine ist hingegen schon Faden vorhanden und wird von einer Lieferspule auf eine Empfängerspule umgespult. Die Empfängerspule wird dabei von der Spulstelle als Kreuzspule bespult.

Beim Betrieb einer solchen Spulstelle kann es vorkommen, dass ein Fadenende auf der Kreuzspule gefunden werden muss. Dies passiert beispielsweise nach einem Fadenbruch oder einem Reinigerschnitt, also wenn absichtlich ein fehlerhafter Fadenabschnitt aus dem Faden herausgeschnitten wurde. In einem solchen Fall lässt sich die Kreuzspule häufig, zum Beispiel aufgrund ihrer Trägheit, nicht mehr rechtzeitig anhalten und das Fadenende wickelt sich auf die Kreuzspule.

Um das den Aufspulvorgang fortsetzen zu können, muss das Fadenende am Umfang der Kreuzspule gefunden und sodann mit dem nachfolgenden Faden verbunden oder an einen neu hergestellten Faden angesetzt werden.

In vielen Fällen wird das Fadenende mit Hilfe von Unterdruck gesucht. Ein solches Verfahren und die dazugehörige Vorrichtung sind beispielsweise in der europäischen Patentanmeldung EP 1 717 183 A1 beschrieben. Dort wird eine Saugdüse in zwei Bewegungsschritten in eine vorgegebene Entfernung zur Kreuzspule gebracht. Die Saugdüse wird dann mit Unterdruck beaufschlagt und die Kreuzspule wird rückwärts (im Vergleich zum Aufwickeln) gedreht. Das Fadenende wird dann durch eine Saugmündung der Saugdüse in die Saugdüse eingesaugt und ist damit gefunden.

Die EP 2 444 347 A2 offenbart eine Arbeitsstelle einer Kreuzspulen herstellenden Textilmaschine, mit einer Spulvorrichtung zum Herstellen einer Kreuzspule. Die Arbeitsstelle weist einen den Fadenlaufweg umschließenden, mehrteiligen Fadenleitkanal mit Aufnahmegehäusen auf, wobei der Fadenleitkanal sich zwischen der in Abspulstellung positionierten Vorlagespule und der Spulvorrichtung erstreckt. Während eines Kreuzspulenwechsels ist der schwenkbeweglich am Saugkopf-Aufnahmegehäuse angeordnete Saugkopf nach der Fadenaufnahme in einer von der Kreuzspule abgeschwenkten zweiten Stellung positioniert, was zum Entstehen eines Fadenstranges zwischen Kreuzspule und der Mündung des Saugkopfes führt. Dieser Fadenstrang wird vor dem Ausstoßen der Kreuzspule aus der Spulvorrichtung von einer entsprechenden Fadenhandhabungseinrichtung eines Kreuzspulenwechselaggregates aufgenommen, durchtrennt, und nach dem Positionieren einer neuen Kreuzspulenhülse im Spulenrahmen an die neue Kreuzspulenhülse angelegt.

Gemäß JP S59-31256 A wird in einer Feinspinnmaschine Faden von einer Spinneinheit gesponnen und um eine Spule gewickelt. Wird der Faden getrennt und soll wieder verbunden werden, wird das Ende des Fadens von der Spule abgesaugt. Zu diesem Zweck wird eine Saugdüse an eine Position vor der Spule geschwenkt. Die Saugdüse bzw. ihre Mündung wird in einem sehr kleinen Bereich in der Nähe der Spule hin und her bewegt, so dass das Ende des Fadens abgesaugt werden kann.

Die zu bewegende Saugdüse hat in diesen Beispielen einen hohen Platzbedarf. Aufgabe der vorliegenden Erfindung ist es somit, eine Fadensucheinrichtung mit geringerem Platzbedarf zu gestalten.

Die Aufgabe wird gelöst durch ein Verfahren und eine Spulstelle mit den Merkmalen der unabhängigen Patentansprüche.

Vorgeschlagen wird ein Verfahren zum Handhaben eines Fadenendes einer Kreuzspule an einer Spulstelle einer Kreuzspulen herstellenden Textilmaschine. Bei der Textilmaschine kann es sich also um eine Spulmaschine oder eine Spinnmaschine, beispielsweise eine Rotor- oder Luftspinnmaschine, handeln. Die Kreuzspule kann in einem Spulenhalter gehalten und angetrieben werden. Die Art des Antriebs ist dabei in diesem Fall nicht von Bedeutung, es kann sich also um einen Antrieb mittels einer die Kreuzspule von außen berührenden Antriebswalze oder aber auch um einen Antrieb, der direkt auf die Hülse der Kreuzspule wirkt, handeln. Ein Faden wird auf der Kreuzspule mittels einer Changiereinrichtung kreuzweise verlegt. Für den Fall, dass ein Fadenende auf der Kreuzspule gesucht werden muss, wird eine Saugdüse mit Unterdruck beaufschlagt und das Fadenende durch eine Saugmündung in die Saugdüse eingesaugt.

Die Saugmündung wird relativ zur Saugdüse bewegt, so dass der Abstand zwischen der Saugmündung und der Kreuzspule verändert wird, um das Fadenende auffinden und zwischen der Saugmündung und der Kreuzspule aufspannen zu können. Die Veränderung des Abstands zwischen der Saugmündung und der Kreuzspule erlaubt es der Saugmündung so nah an die Oberfläche der Kreuzspule zu kommen, dass das Fadenende mit einem wohl dosierten Unterdruck angesaugt werden kann. Durch eine Vergrößerung des Abstands zwischen der Saugmündung und der Kreuzspule wird das gefundene Fadenende zwischen der Kreuzspule und der Saugmündung aufgespannt. Der aufgespannte Faden wird dann zur Weiterbearbeitung zu einem Aggregat der Textilmaschine bewegt. Bei diesem Aggregat kann es sich beispielsweise um eine Spleißvorrichtung, die zwei Fadenenden miteinander verbindet, oder um eine Ansetzvorrichtung, die das Fadenende an einen neu hergestellten oder neu herzustellenden Faden ansetzt, handeln. Dadurch, dass bei diesem Vorgang lediglich die Saugmündung relativ zur Saugdüse bewegt wird und nicht die gesamte Saugdüse in Relation zur Kreuzspule bewegt werden muss, ist nur ein kleiner Teil in Bewegung, was eine deutliche Verringerung des Platzbedarfs zur Folge hat.

Erfindungsgemäß wird die Saugmündung so bewegt, dass sie linear verschoben wird. Diese Bewegung lässt sich leicht realisieren und ermöglicht dabei einen großen Bewegungsrahmen der Saugmündung. Sie sind außerdem platzsparend und kostengünstig.

Die Saugdüse ist an der Spulstelle im Wesentlichen stationär und unmittelbar vor der Kreuzspule angeordnet. Dadurch, dass die Saugdüse im Wesentlichen stationär ist, muss auch kein weiterer Platz für Bewegungen der Saugdüse freigehalten werden. Durch die Anordnung der Saugdüse unmittelbar vor der Kreuzspule kann die Saugmündung durch eine kleine Bewegung so nah an die Kreuzspule gebracht werden, dass sie das Fadenende mit einem wohl dosierten Unterdruck einsaugen kann, was wiederum für den schon auf der Kreuzspule verlegten Faden besonders schonend ist.

Von Vorteil ist es auch, wenn, nachdem das Fadenende in die Saugmündung eingesaugt und zwischen der Kreuzspule und der Saugmündung aufgespannt wurde, ein Fadenhandhabungselement zwischen Kreuzspule und Saugmündung hineinbewegt wird, den aufgespannten Faden erfasst und danach den Faden zur Weiterbearbeitung zu dem Aggregat der Textilmaschine bewegt. So kann der Ablauf von Fadensuche zu Weiterbearbeitung gut automatisiert und eine Bewegung der Saugdüse vermieden werden, was wiederum dem geringen Platzbedarf zu Gute kommt. Besonders vorteilhaft ist es dabei, wenn das Fadenhandhabungselement ein Fadenfänger ist, der zuverlässig arbeitet und den Faden schont.

Ferner ist es von Vorteil, wenn das Fadenende auf der Kreuzspule mittels der Saugmündung der Saugdüse aufgefunden wird. Durch das Einsaugen werden sowohl das Fadenende als auch die obersten Schichten des sich auf der Kreuzspule befindlichen Fadens schonender behandelt als beispielsweise bei einem mechanischen Fadensuchen oder einem Fadensuchen mit Hilfe von Druckluft.

Es ist auch vorteilhaft, wenn die Saugmündung und/oder der Spulenhalter zwischen einer ersten Stellung zum Ansaugen des Fadenendes und einer zweiten Stellung zum Aufspannen des Fadenendes zwischen der Kreuzspule und der Saugmündung bewegt wird. In der ersten Stellung ist dabei die Saugmündung relativ nah an der Oberfläche der Kreuzspule, so dass der Unterdruck das Fadenende einsaugen kann. In der zweiten Stellung wird dann das Fadenende zwischen der Kreuzspule und der Saugmündung aufgespannt, vorzugsweise mit so viel Abstand, dass das Fadenhandhabungselement dazwischen passt und den aufgespannten Faden erfassen kann, ohne die Kreuzspule zu berühren und den darauf befindlichen Faden zu beschädigen.

Ferner ist es von Vorteil, wenn, insbesondere nachdem der aufgespannte Faden zur Weiterbearbeitung zu einem Aggregat der Textilmaschine bewegt wurde, die Saugmündung in eine Parkstellung bewegt wird. Dabei kann die Parkstellung mit der ersten Stellung oder der zweiten Stellung identisch sein oder eine von der ersten Stellung und der zweiten Stellung verschiedene Stellung darstellen. Die Parkstellung wird so gewählt, dass die Saugmündung, wenn sie sich in der Parkstellung befindet, andere Teile der Spulstelle, beispielsweise die Changiereinrichtung, möglichst wenig behindert. Dadurch, dass die Saugmündung dann, wenn die Saugdüse nicht mehr gebraucht wird - was beispielsweise nach erfolgtem Bewegen des Fadens zu einem Aggregat der Textilmaschine der Fall ist - in die Parkposition gefahren wird, wird also eine Behinderung von anderen Teilen der Spulstelle möglichst gering gehalten.

Von Vorteil ist es auch, wenn die Kreuzspule zum Aufspannen des Fadenendes zwischen der Kreuzspule und der Saugmündung angehoben wird. Durch diese Bewegung der Kreuzspule wird der Faden in einer wohldefinierten Weise aufgespannt und das Fadenhandhabungselement kann ihn problemlos erfassen.

Ferner ist es vorteilhaft, wenn zum Auffinden des Fadenendes und/oder zum Aufspannen des Fadens der Abstand zwischen der Saugmündung und der Kreuzspule verändert wird. Zum Auffinden des Fadenendes ist es nämlich am besten, wenn sich die Saugmündung nur knapp über der Oberfläche der Kreuzspule befindet, so dass das Fadenende durch den Unterdruck leicht eingesaugt werden kann. Zum Aufspannen des Fadens sollte hingegen der Abstand von der Saugmündung zur Oberfläche der Kreuzspule zumindest so groß sein, dass das Fadenhandhabungselement den Faden erfassen kann ohne die Saugmündung oder die Oberfläche der Kreuzspule zu berühren.

Schließlich ist es von Vorteil, wenn der Faden mittels einer Bewegung der Saugmündung zur Weiterbearbeitung zu einem Aggregat der Textilmaschine bewegt wird. So ist die Saugmündung gleichzeitig auch das Fadenhandhabungselement, was Kosten sowie Platz spart. Ferner wird die vorgesehene Bewegung der Saugmündung vielseitiger ausgenutzt.

Das Verfahren wird gemäß der vorangegangenen Beschreibung durchgeführt, wobei die genannten Merkmale einzeln oder in beliebiger Kombination durchgeführt werden können.

Ferner wird eine Spulstelle einer Kreuzspulen herstellenden Textilmaschine mit einem Spulenhalter zum Halten einer Kreuzspule, einer Changiereinrichtung zum kreuzweisen Verlegen eines Fadens auf der Kreuzspule und einer mit Unterdruck beaufschlagbaren Saugdüse mit einer Saugmündung zum Einsaugen eines Fadenendes vorgeschlagen.

Die Saugdüse weist eine beweglich an der Saugdüse angeordnete Saugmündung auf, um das Fadenende auffinden und zwischen der Saugmündung und der Kreuzspule aufspannen zu können. Außerdem ist ein Fadenhandhabungselement vorgesehen, um den aufgespannten Faden zur Weiterbearbeitung zu einem Aggregat der Textilmaschine bewegen zu können. Die bewegliche Saugmündung ermöglicht eine platzsparende Konstruktion und erlaubt es, das Fadenende präzise aufzufinden. Um das Fadenende sodann weiterzubearbeiten, beispielsweise zu spleißen, also mit einem zweiten Fadenende zu verbinden, oder an den Ausgang eines Spinnaggregats anzusetzen, ist ein Fadenhandhabungselement das geeignete Mittel.

Erfindungsgemäß ist die Saugmündung in Bezug auf die Saugdüse linear verschiebbar. Dies ist mechanisch robust und einfach konstruierbar und ermöglicht gleichzeitig eine gute Bewegung der Saugmündung.

Die Saugdüse ist an der Spulstelle im Wesentlichen stationär und unmittelbar vor der Kreuzspule angeordnet. Durch die stationäre Anordnung werden Kosten und Platz einer Bewegungsmechanik gespart. Damit die Saugmündung leicht zur Oberfläche der Kreuzspule kommt, wo sie das Fadenende einsaugen soll, ist eine Anordnung der Saugdüse unmittelbar vor der Kreuzspule die beste Lösung.

Von Vorteil ist es auch, wenn die Saugmündung und/oder der Spulenhalter so ausgebildet ist, dass sie bzw. er zwischen einer ersten Stellung zum Ansaugen des Fadenendes und einer zweiten Stellung zum Aufspannen des Fadenendes zwischen der Kreuzspule und der Saugmündung bewegbar ist. Dies ermöglicht in der ersten Stellung einen geringen Abstand zwischen der Saugmündung und der Kreuzspule, der ideal dazu geeignet ist, das Fadenende einzusaugen, und in der zweiten Stellung einen gewissen Abstand zwischen der Saugmündung und der Kreuzspule, der es dem Fadenhandhabungselement ermöglicht, das Fadenende zu erfassen.

Vorteilhafterweise ist die Saugmündung in eine Parkstellung bewegbar. Die Parkstellung ist dabei mit der ersten Stellung oder der zweiten Stellung identisch oder stellt eine von der ersten Stellung und der zweiten Stellung verschiedene Stellung dar. Sie wird so gewählt, dass die Saugmündung, wenn sie sich in der Parkstellung befindet, andere Teile der Spulstelle, zum Beispiel die Changiereinrichtung, möglichst wenig behindert. So wird ein problemloser Spulbetrieb ermöglicht.

Es ist vorteilhaft, wenn das Fadenhandhabungselement zum Bewegen des Fadens zu dem Aggregat ein Fadenfänger und/oder die Saugmündung ist. Im Falle des Fadenfängers, der das Fadenende beispielsweise mit Unterdruck oder durch Klemmung erfasst, ist ein großer Bewegungsspielraum gegeben. Ist das Fadenhandhabungselement hingegen die Saugmündung, so ist der Bewegungsspielraum zwar kleiner, es kann aber auf ein separates Element verzichtet werden.

Von Vorteil ist es schließlich auch, wenn die Kreuzspule zum Aufspannen des Fadens zwischen der Kreuzspule und der Saugmündung anhebbar ist. Durch das Anheben der Kreuzspule bleibt beim Aufspannen des Fadens die Saugmündung an einer festen Position und das Fadenhandhabungselement kann den aufgespannten Faden problemlos erfassen.

Die Vorrichtung ist gemäß der vorangegangenen Beschreibung ausgebildet, wobei die genannten Merkmale einzeln oder in beliebiger Kombination vorhanden sein können.

Weitere Vorteile der Erfindung sind in den nachfolgenden Ausführungsbeispielen beschrieben. Es zeigt:
- **Figur 1a**: eine schematische Seitenansicht einer Spulstelle einer Kreuzspulen herstellenden Textilmaschine gemäß dem Stand der Technik,
- **Figur 1b**: eine weitere schematische Seitenansicht der Spulstelle aus Figur 1a,
- **Figur 1c**: eine weitere schematische Seitenansicht der Spulstelle aus Figuren 1a und 1b,
- **Figur 2a**: eine schematische Seitenansicht einer erfindungsgemäßen Spulstelle einer Kreuzspulen herstellenden Textilmaschine,
- **Figur 2b**: eine weitere schematische Seitenansicht der Spulstelle aus Figur 2a,
- **Figur 2c**: eine weitere schematische Seitenansicht der Spulstelle aus Figuren 2a und 2b,
- **Figur 3a**: eine schematische Seitenansicht einer weiteren Spulstelle einer Kreuzspulen herstellenden Textilmaschine gemäß dem Stand der Technik,
- **Figur 3b**: eine weitere schematische Seitenansicht der Spulstelle aus Figur 3a,
- **Figur 3c**: eine weitere schematische Seitenansicht der Spulstelle aus Figuren 3a und 3b, und
- **Figur 3d**: eine weitere schematische Seitenansicht der Spulstelle aus Figuren 3a, 3b und 3c.

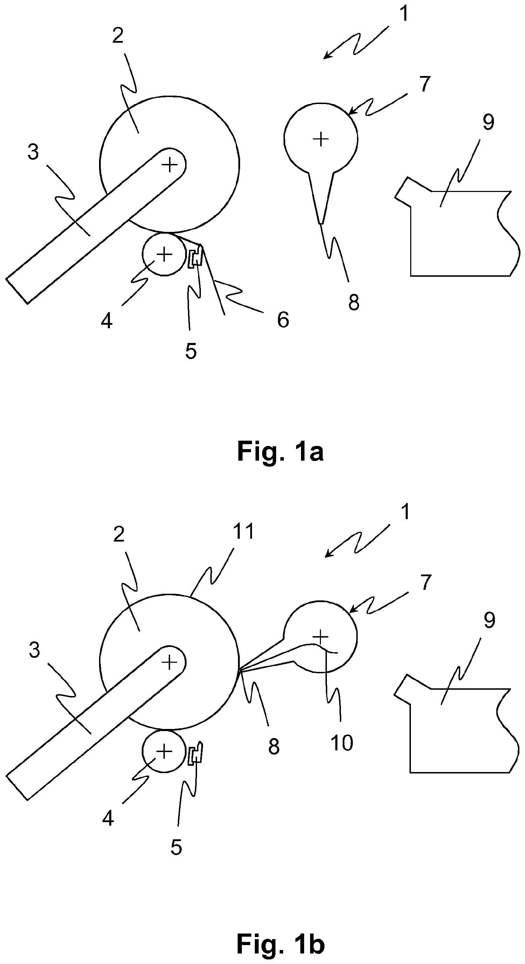

Figur 1a zeigt eine schematische Seitenansicht einer Spulstelle 1 einer Kreuzspulen herstellenden Textilmaschine. Dabei kann es sich bei der Textilmaschine sowohl um eine Spulmaschine als auch um eine Spinnmaschine, beispielsweise eine Rotor- oder Luftspinnmaschine, handeln. Eine Kreuzspule 2 wird in einem Spulenhalter 3 gehalten und von einer Antriebswalze 4 angetrieben. Im Rahmen der Erfindung wäre es aber ebenso möglich, die Spule 2 direkt über eine in dem Spulenhalter 3 geklemmte Hülse der Spule 2 anzutreiben. Eine Changiereinrichtung 5 verlegt dabei einen Faden 6 kreuzweise auf der Kreuzspule 2. Der Faden 6 kommt dabei entweder von einer Lieferspule oder von einem Spinnaggregat (beide hier nicht gezeigt). Eine im Wesentlichen stationäre Saugdüse 7 mit Saugmündung 8 wird in dieser Darstellung gerade nicht verwendet und befindet sich in einer Parkstellung. Ebenso wird ein hier gezeigtes Aggregat 9 der Textilmaschine, beispielsweise eine Spleißvorrichtung, die zwei Fadenenden miteinander verbinden kann, oder eine Ansetzvorrichtung, die ein Fadenende an einen neu hergestellten oder neu herzustellenden Faden ansetzen kann, gerade nicht verwendet.

Die Saugdüse 7 und das Aggregat 9 werden erst dann gebraucht, wenn der normale Spul- bzw. Spinnbetrieb unterbrochen wurde, beispielsweise durch einen Fadenbruch, also ein Reißen des Fadens 6, oder einen Reinigerschnitt, also ein absichtliches Herausschneiden eines fehlerhaften Abschnitts des Fadens 6. In diesen Fällen wickelt sich das Fadenende auf die Kreuzspule 2, da die Kreuzspule 2 aufgrund ihrer Trägheit nicht schnell genug abgebremst werden kann. Das aufgewickelte Fadenende wird in so einem Fall gesucht, gefunden und dann weiterbearbeitet.

Das Suchen und Finden des Fadenendes 10 wird in Figur 1b verdeutlicht. Zum Suchen des Fadenendes 10 wird die Saugmündung 8 um die Saugdüse 7 gedreht bis sich die Saugmündung 8 knapp über der Oberfläche 11 der Kreuzspule 2 befindet. Sodann wird die Saugdüse 7 mit Unterdruck beaufschlagt und die Kreuzspule 2 langsam entgegen der Drehrichtung im Spulbetrieb gedreht. Dies wird so lange durchgeführt bis das Fadenende 10 auf der Oberfläche 11 der Kreuzspule 2 gefunden und durch die Saugmündung 8 in die Saugdüse 7 eingesaugt wird.

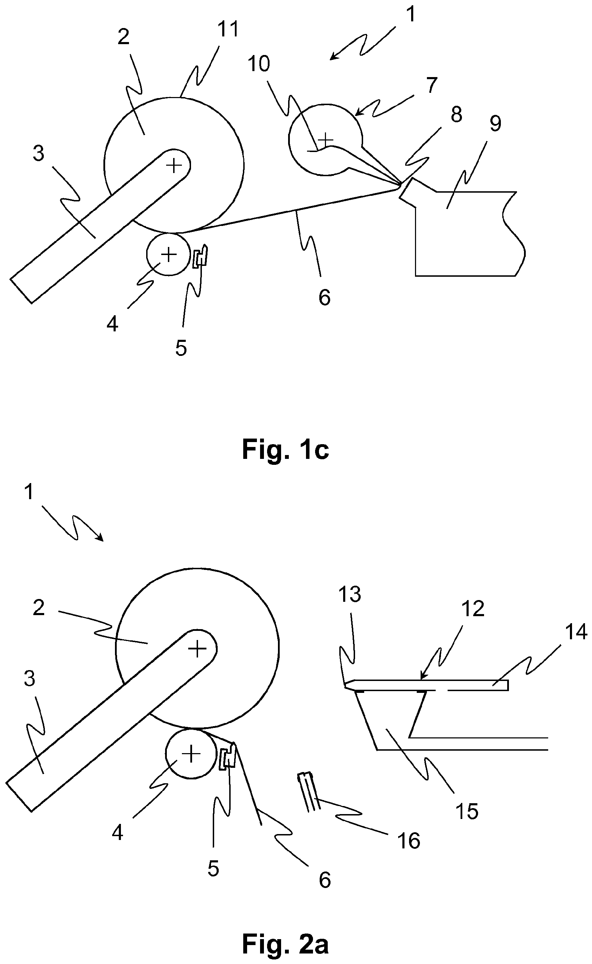

Der nächste Schritt ist in Figur 1c gezeigt. Nachdem die Saugdüse 7 das Fadenende 10 eingesaugt hat, wird die Saugmündung 8 wieder um die Saugdüse 7 gedreht. Die Saugmündung 8 wird dabei so weit gedreht, bis sie den Faden 6 zum Aggregat 9 bewegt hat. Nun übernimmt das Aggregat 9 das Fadenende 10 und bearbeitet es weiter, beispielsweise indem es das Fadenende 10 mit einem weiteren Fadenende verbindet oder indem es das Fadenende 10 an einen neu hergestellten oder neu herzustellenden Faden ansetzt. Die Saugmündung 8 wird sodann zurück in die Parkstellung bewegt, der Faden 6 wird wieder in die Changiereinrichtung 5 eingefädelt und der Spinn- bzw. Spulbetrieb wird fortgesetzt.

Bei der nachfolgenden Beschreibung des in Figur 2a dargestellten alternativen Ausführungsbeispiels werden für Merkmale, die im Vergleich zum in den Figuren 1a, 1b und 1c dargestellten ersten Ausführungsbeispiel in ihrer Ausgestaltung und/oder Wirkweise identisch und/oder zumindest vergleichbar sind, gleiche Bezugszeichen verwendet. Sofern diese nicht nochmals detailliert erläutert werden, entspricht deren Ausgestaltung und/oder Wirkweise der Ausgestaltung und Wirkweise der vorstehend bereits beschriebenen Merkmale.

Beim im Figur 2a dargestellten erfindungsgemäßen Ausführungsbeispiel ist im Vergleich zum in den Figuren 1a, 1b und 1c dargestellten Ausführungsbeispiel eine Saugdüse 12 mit einer linear verschiebbaren Saugmündung 13 vorgesehen. Die Saugmündung 13 ist dabei an einem Ende eines Saugrüssels 14 angeordnet, der in Bezug auf den stationären Grundkörper 15 der Saugdüse 12 linear verschoben werden kann. Hier befindet sich die Saugdüse 12, ebenso wie ein pneumatischer Fadenfänger 16, in einer Parkstellung.

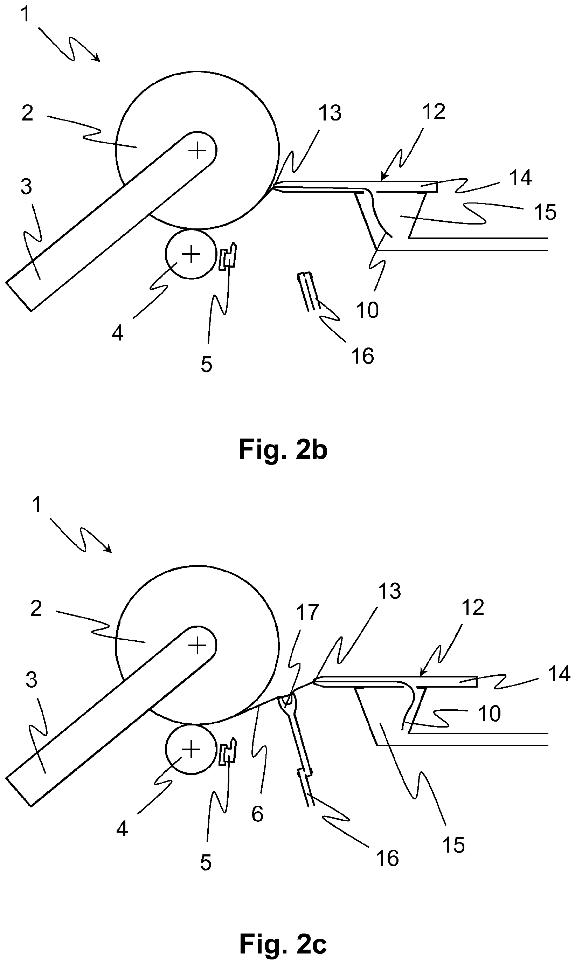

Das Suchen eines Fadenendes 10 auf der Oberfläche 11 der Kreuzspule 2 wird in Figur 2b gezeigt. Dazu wird der Saugrüssel 14 so lange in Richtung der Kreuzspule 2 verschoben, bis sich die Saugmündung 13 knapp über der Oberfläche 11 der Kreuzspule 2 befindet. Sodann wird die Saugdüse 12 mit Unterdruck beaufschlagt und die Kreuzspule 2 entgegen der Drehrichtung im Spulbetrieb gedreht bis das Fadenende 10 über die Saugmündung 13 in den Saugrüssel 14 eingesaugt wird.

Das weitere Verfahren wird in Figur 2c gezeigt. Um den Faden 6 weiterzubearbeiten, wird der Saugrüssel 14 samt Saugmündung 13 von der Kreuzspule 2 weg verschoben, so dass der Faden 6 zwischen der Kreuzspule 2 und der Saugmündung 13 aufgespannt wird. Eine Fangdüse 17 des pneumatischen Fadenfängers 16 wird nun in die Nähe des aufgespannten Fadens 6 bewegt. Die Fangdüse 17 wird mit Unterdruck beaufschlagt, so dass der aufgespannte Faden 6 von der Fangdüse 17 angesaugt wird. Der so vom pneumatischen Fadenfänger 16 erfasste Faden 6 wird dann mit Hilfe der Fangdüse 17 zur Weiterbearbeitung zu einem hier nicht gezeigten Aggregat, beispielsweise einer Spleißvorrichtung oder einer Anspinnvorrichtung, bewegt. Die Saugmündung 13 und die Fangdüse 17 werden sodann zurück in die Parkstellung bewegt, der Faden 6 wird wieder in die Changiereinrichtung 5 eingefädelt und der Spinn- bzw. Spulbetrieb wird fortgesetzt.

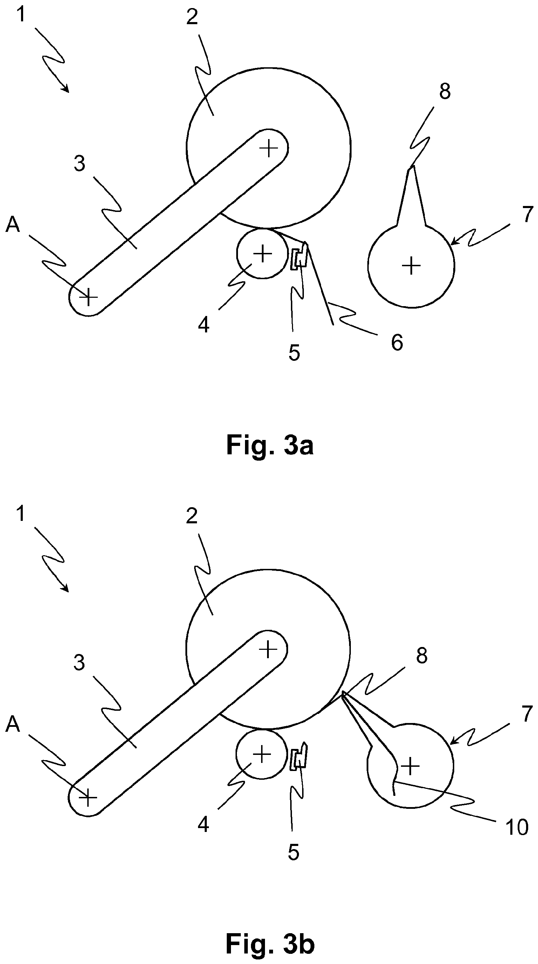

Bei der nachfolgenden Beschreibung des in Figur 3a dargestellten alternativen Ausführungsbeispiels werden für Merkmale, die im Vergleich zum in den Figuren 1a, 1b und 1c sowie 2a, 2b und 2c dargestellten ersten bzw. zweiten Ausführungsbeispiel in ihrer Ausgestaltung und/oder Wirkweise identisch und/oder zumindest vergleichbar sind, gleiche Bezugszeichen verwendet. Sofern diese nicht nochmals detailliert erläutert werden, entspricht deren Ausgestaltung und/oder Wirkweise der Ausgestaltung und Wirkweise der vorstehend bereits beschriebenen Merkmale.

Beim in Figur 3a gezeigten Ausführungsbeispiel ist der Spulenhalter 3 um eine Achse A drehbar gelagert, so dass die Position der Kreuzspule 2 verändert werden kann. Die Saugdüse 7 befindet sich in dieser Darstellung in einer Parkstellung.

Figur 3b zeigt die Spulstelle 1 nach einem Fadenbruch oder einem Reinigerschnitt. Zum Fadensuchen wird die Saugmündung 8 um die Saugdüse 7 gedreht und mit Unterdruck beaufschlagt. Gleichzeitig wird die Kreuzspule 2 entgegen der Drehrichtung beim Spulbetrieb gedreht bis das Fadenende 10 über die Saugmündung 8 in die Saugdüse 7 eingesaugt wird.

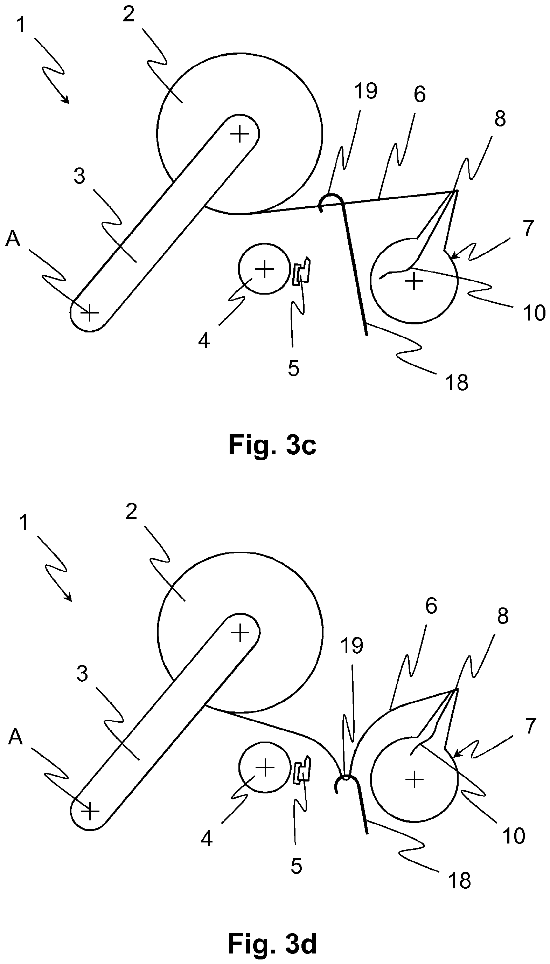

Nun wird, wie in Figur 3c gezeigt, der Faden 6 aufgespannt. Dazu wird die Saugmündung 8 derart um die Saugdüse 7 gedreht, dass sie sich von der Kreuzspule 2 entfernt. Gleichzeitig werden der Spulenhalter 3 und damit die Kreuzspule 2 um die Achse A gedreht, so dass sich die Kreuzspule 2 von der Saugdüse 7 entfernt. Der Faden 6 wird somit zwischen der Kreuzspule 2 und der Saugmündung 8 aufgespannt. Ein mechanischer Fadenfänger 18 wird sodann eingeschwenkt, wobei ein Fanghaken 19, der an einem Ende des mechanischen Fadenfängers 18 angeordnet ist, den Faden 6 erfasst.

Wie in Figur 3d dargestellt zieht der Fanghaken 19 den Faden 6 so, dass der Faden 6 eine Schlaufe bildet. Das Fadenende 10 verbleibt dabei in der Saugdüse 7. Die für die Schlaufe benötigte Fadenlänge wird entweder von der Kreuzspule 2 abgewickelt, insbesondere wenn die Kreuzspule wie hier dargestellt abgehoben ist, oder aus dem der Saugdüse 7 abgezogen, insbesondere wenn die Kreuzspule wie in den zuvor gezeigten Ausführungsbeispielen auf der Antriebswalze 4 aufliegt. In letzterem Fall kann natürlich auch durch eine gezielte Rückspulung die benötigte Fadenlänge in die Schlaufe gefördert werden. Die so gebildete Schlaufe im Faden 6 wird dann zur Weiterbearbeitung zu einem hier nicht gezeigten Aggregat gezogen. Nach erfolgter Weiterbearbeitung wird die Saugmündung 8 zurück in die Parkstellung gedreht, der Faden 6 wird wieder in die Changiereinrichtung 5 eingefädelt und der Spinn- bzw. Spulbetrieb wird fortgesetzt.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind.

### Bezugszeichenliste

- 1: Spulstelle
- 2: Kreuzspule
- 3: Spulenhalter
- 4: Antriebswalze
- 5: Changiereinrichtung
- 6: Faden
- 7: Saugdüse
- 8: Saugmündung
- 9: Aggregat
- 10: Fadenende
- 11: Oberfläche
- 12: Saugdüse
- 13: Saugmündung
- 14: Saugrüssel
- 15: Grundkörper
- 16: Pneumatischer Fadenfänger
- 17: Fangdüse
- 18: Mechanischer Fadenfänger
- 19: Fanghaken

- A: Achse

## Patentansprüche

1. Verfahren zum Handhaben eines Fadenendes (10) einer Kreuzspule (2) an einer Spulstelle (1) einer Kreuzspulen (2) herstellenden Textilmaschine wobei
- die Kreuzspule (2) in einem Spulenhalter (3) gehalten und angetrieben werden kann,
- ein Faden (6) auf der Kreuzspule (2) mittels einer Changiereinrichtung (5) kreuzweise verlegt wird und
- eine Saugdüse (12) mit Unterdruck beaufschlagt wird und das Fadenende (10) durch eine Saugmündung (13) in die Saugdüse (12) eingesaugt wird,
- die Saugmündung (13) relativ zur Saugdüse (12) bewegt wird,
- so dass der Abstand zwischen der Saugmündung (13) und der Kreuzspule (2) verändert wird, um das Fadenende (10) auffinden und zwischen der Saugmündung (13) und der Kreuzspule (2) aufspannen zu können und dass
- der aufgespannte Faden (6) zur Weiterbearbeitung zu einem Aggregat (9) der Textilmaschine bewegt wird,
**dadurch gekennzeichnet, dass**
- die Saugmündung (13) linear verschoben wird und
- dass die Saugdüse (12) an der Spulstelle (1) im Wesentlichen stationär und unmittelbar vor der Kreuzspule (2) angeordnet ist.

2. Verfahren nach dem vorherigen Anspruch, **dadurch gekennzeichnet, dass** ein Fadenhandhabungselement (16), insbesondere ein Fadenfänger (16), zwischen Kreuzspule (2) und Saugmündung (13) hineinbewegt wird, den aufgespannten Faden (6) erfasst und danach den Faden (6) zur Weiterbearbeitung zum Aggregat (9) der Textilmaschine bewegt.

3. Verfahren nach einem oder mehreren der vorherigen Ansprüche, **dadurch gekennzeichnet, dass** das Fadenende (10) auf der Kreuzspule (2) mittels der Saugmündung (13) der Saugdüse (12) aufgefunden wird.

4. Verfahren nach einem oder mehreren der vorherigen Ansprüche, **dadurch gekennzeichnet, dass** die Saugmündung (13) und/oder der Spulenhalter (3) zwischen einer ersten Stellung zum Ansaugen des Fadenendes (10) und einer zweiten Stellung zum Aufspannen des Fadenendes (10) zwischen der Kreuzspule (2) und der Saugmündung (13) bewegt wird und/oder dass, insbesondere nachdem der aufgespannte Faden (6) zur Weiterbearbeitung zu einem Aggregat (9) der Textilmaschine bewegt wurde, die Saugmündung (13) in eine Parkstellung bewegt wird.

5. Verfahren nach einem oder mehreren der vorherigen Ansprüche, **dadurch gekennzeichnet, dass** die Kreuzspule (2) zum Aufspannen des Fadenendes (10) zwischen der Kreuzspule (2) und der Saugmündung (13) angehoben wird.

6. Verfahren nach einem oder mehreren der vorherigen Ansprüche, **dadurch gekennzeichnet, dass** zum Auffinden des Fadenendes (10) und/oder zum Aufspannen des Fadens (6) der Abstand zwischen der Saugmündung (13) und der Kreuzspule (2) verändert wird.

7. Verfahren nach einem oder mehreren der vorherigen Ansprüche, **dadurch gekennzeichnet, dass** der Faden (6) mittels einer Bewegung der Saugmündung (13) zur Weiterbearbeitung zum Aggregat (9) der Textilmaschine bewegt wird.

8. Spulstelle einer Kreuzspulen (2) herstellenden Textilmaschine mit
- einem Spulenhalter (3) zum Halten einer Kreuzspule (2),
- einer Changiereinrichtung (5) zum kreuzweisen Verlegen eines Fadens (6) auf der Kreuzspule (2) und
- einer mit Unterdruck beaufschlagbaren Saugdüse (12) mit einer Saugmündung (13) zum Einsaugen eines Fadenendes (10),
- die Saugdüse (12) eine beweglich an der Saugdüse (12) angeordnete Saugmündung (13) aufweist, um das Fadenende (10) auffinden und zwischen der Saugmündung (8; 13) und der Kreuzspule (2) aufspannen zu können und dass
- ein Fadenhandhabungselement (13; 16) vorgesehen ist, um den aufgespannten Faden (6) zur Weiterbearbeitung zu einem Aggregat (9) der Textilmaschine bewegen zu können,
**dadurch gekennzeichnet, dass**
- die Saugmündung (13) in Bezug auf die Saugdüse (12) linear verschiebbar ist und
- dass die Saugdüse (12) an der Spulstelle (1) im Wesentlichen stationär und unmittelbar vor der Kreuzspule (2) angeordnet ist.

9. Spulstelle nach dem vorherigen Anspruch, **dadurch gekennzeichnet, dass** die Saugmündung (13) und/oder der Spulenhalter (3) zwischen einer ersten Stellung zum Ansaugen des Fadenendes (10) und einer zweiten Stellung zum Aufspannen des Fadenendes (10) zwischen der Kreuzspule (2) und der Saugmündung (13) bewegbar ist und/oder dass die Saugmündung (13) in eine Parkstellung bewegbar ist.

10. Spulstelle nach einem oder mehreren der vorherigen Ansprüche 8-9, **dadurch gekennzeichnet, dass** das Fadenhandhabungselement (13; 16) zum Bewegen des Fadens (6) zu dem Aggregat (9) ein Fadenfänger (16) und/oder die Saugmündung (13) ist.

11. Spulstelle nach einem oder mehreren der vorherigen Ansprüche 8-10, **dadurch gekennzeichnet, dass** die Kreuzspule (2) zum Aufspannen des Fadens (6) zwischen der Kreuzspule (2) und der Saugmündung (13) anhebbar ist.

## Claims

1. Method for handling a yarn end (10) of a cross-wound bobbin (2) at a winding station (1) of a textile machine producing cross-wound bobbins (2), whereas
- the cross-wound bobbin (2) can be held and driven in a bobbin holder (3),
- a thread (6) is laid in a cross-wise manner on the cross-wound bobbin (2) by means of a traversing device (5) and
- a suction nozzle (12) is subjected to negative pressure and the thread end (10) is sucked into the suction nozzle (12) through a suction mouth (13),
- the suction mouth (13) is moved relative to the suction nozzle (12),
- such that the distance between the suction mouth (13) and the cross-wound bobbin (2) is changed, in order to be able to find the thread end (10) and to stretch it between the suction mouth (13) and the cross-wound bobbin (2) and that
- the stretched thread (6) is moved to an aggregate (9) of the textile machine for further processing.
**characterized in that**,
- the suction mouth (13) is displaced linearly and
- that the suction nozzle (12) is arranged at the winding station (1) in a manner that is essentially stationary and is directly in front of the cross-wound bobbin (2).

2. Method according to the preceding claim, **characterized in that** a thread handling element (16), in particular a thread catcher (16), is moved in between the cross-wound bobbin (2) and the suction mouth (13), captures the stretched thread (6) and then moves the thread (6) to the aggregate (9) of the textile machine for further processing.

3. Method according to one or more of the preceding claims, **characterized in that** the thread end (10) is found on the cross-wound bobbin (2) by means of the suction mouth (13) of the suction nozzle (12).

4. Method according to one or more of the preceding claims, **characterized in that** the suction mouth (13) and/or the bobbin holder (3) is moved between a first position for sucking in the thread end (10) and a second position for stretching the thread end (10) between the cross-wound bobbin (2) and the suction mouth (13) and/or the suction mouth (13) is moved into a parking position, in particular after the stretched thread (6) has been moved to an aggregate (9) of the textile machine for further processing..

5. Method according to one or more of the preceding claims, **characterized in that** the cross-wound bobbin (2) is lifted for stretching the thread end (10) between the cross-wound bobbin (2) and the suction mouth (13).

6. Method according to one or more of the preceding claims, **characterized in that**, for finding the thread end (10) and/or for stretching the thread (6), the distance between the suction mouth (13) and the cross-wound bobbin (2) is changed.

7. Method according to one or more of the preceding claims, **characterized in that** the thread (6) is moved to an aggregate (9) of the textile machine for further processing by means of a movement of the suction mouth (13).

8. Winding station of a textile machine producing cross-wound bobbins (2) with
- a bobbin holder (3) for holding a cross-wound bobbin (2),
- a traversing device (5) for the crosswise laying of a thread (6) on the cross-wound bobbin (2) and
- a suction nozzle (12) that can be subjected to negative pressure with a suction mouth (13) for sucking in a thread end (10),
- the suction nozzle (12) features a suction mouth (13) arranged in a movable manner on the suction nozzle (12), in order to be able to find the thread end (10) and to stretch it between the suction mouth (13) and the cross-wound bobbin (2) and that
- a thread handling element (13; 16) is provided, in order to be able to move the stretched thread (6) to an aggregate (9) of the textile machine for further processing,
**characterized in that**,
- the suction mouth (13) is displaced linearly in relation to the suction nozzle (12) and
- that the suction nozzle (12) is arranged at the winding station (1) in a manner that is essentially stationary and is directly in front of the cross-wound bobbin (2).

9. Winding station according to the preceding claim, **characterized in that** the suction mouth (13) and/or the bobbin holder (3) can be moved between a first position for sucking in the thread end (10) and a second position for stretching the thread end (10) between the cross-wound bobbin (2) and the suction mouth (13) and/or the suction mouth (13) is movable into a parking position.

10. Winding station according to one or more of the preceding claims 8 - 9, **characterized in that** the thread handling element (13; 16) for moving the thread (6) to the aggregate (9) is a thread catcher (16) and/or the suction mouth (13).

11. Winding station according to one or more of the preceding claims 8 - 10, **characterized in that** the cross-wound bobbin (2) can be lifted for stretching the thread (6) between the cross-wound bobbin (2) and the suction mouth (13).

## Revendications

1. Procédé pour manier une extrémité de fil (10) d'une bobine croisée (2) à un poste de bobinage (1) d'une machine textile produisant des bobines croisées (2), dans lequel
- la bobine croisée (2) est tenue dans un porte-bobine (3) et peut être entraînée,
- un fil (6) est déposé de manière croisée sur la bobine croisée (2) au moyen d'un dispositif de va-et-vient (5) et
- une buse d'aspiration (12) est soumise à une dépression et l'extrémité (10) de fil est aspirée dans la buse d'aspiration (12) par une bouche d'aspiration (13),
- la bouche d'aspiration (13) est déplacée par rapport à la buse d'aspiration (12),
- de sorte que la distance entre la bouche d'aspiration (13) et la bobine croisée (2) soit modifiée afin de pouvoir localiser l'extrémité (10) de fil et de pouvoir tendre cette dernière entre la bouche d'aspiration (13) et la bobine croisée (2), et
- le fil (6) tendu est déplacé vers un groupe (9) de la machine textile en vue du traitement ultérieur,
**caractérisé en ce que**
- la bouche d'aspiration (13) est déplacée linéairement et
- **en ce que** la buse d'aspiration (12) est disposée de manière essentiellement stationnaire au poste de bobinage (1) et directement en amont de la bobine croisée (2).

2. Procédé selon la revendication précédente, **caractérisé en ce qu'**un élément de maniement (16) de fil, en particulier un attrape-fil (16), est déplacé entre la bobine croisée (2) et la bouche d'aspiration (13), saisit le fil (6) tendu et déplace ensuite le fil (6) vers le groupe (9) de la machine textile en vue du traitement ultérieur.

3. Procédé selon l'une quelconque ou plusieurs des revendications précédentes, **caractérisé en ce que** l'extrémité (10) de fil est localisé sur la bobine croisée (2) à l'aide de la bouche d'aspiration (13) de la buse d'aspiration (12).

4. Procédé selon l'une quelconque ou plusieurs des revendications précédentes, **caractérisé en ce que** la bouche d'aspiration (13) et/ou le porte-bobine (3) est/sont déplacé(s) entre une première position pour aspirer l'extrémité (10) de fil et une seconde position pour tendre l'extrémité (10) de fil entre la bobine croisée (2) et la bouche d'aspiration (13) et/ou **en ce que**, en particulier après que le fil (6) tendu ait été déplacé vers un groupe (9) de la machine textile en vue du traitement ultérieur, la bouche d'aspiration (13) est déplacée dans une position de stationnement.

5. Procédé selon l'une quelconque ou plusieurs des revendications précédentes, **caractérisé en ce que** la bobine croisée (2) est soulevée pour tendre l'extrémité (10) de fil entre la bobine croisée (2) et la bouche d'aspiration (13).

6. Procédé selon l'une quelconque ou plusieurs des revendications précédentes, **caractérisé en ce que** la distance entre la bouche d'aspiration (13) et la bobine croisée (2) est modifiée pour localiser l'extrémité (10) de fil et/ou pour tendre le fil (6).

7. Procédé selon l'une quelconque ou plusieurs des revendications précédentes, **caractérisé en ce que** le fil (6) est déplacé au groupe (9) de la machine textile en vue du traitement ultérieur à l'aide d'un mouvement de la bouche d'aspiration (13).

8. Poste de bobinage d'une machine textile produisant des bobines croisées (2), avec
- un porte-bobine (3) pour tenir une bobine croisée (2),
- un dispositif de va-et-vient (5) pour déposer de manière croisée un fil (6) sur la bobine croisée (2) et
- une buse d'aspiration (12) pouvant être soumise à une dépression avec une bouche d'aspiration (13) pour aspirer une extrémité (10) de fil,
- la buse d'aspiration (12) comporte une bouche d'aspiration (13) disposée de manière mobile sur la buse d'aspiration (12) afin de pouvoir localiser l'extrémité (10) de fil et de pouvoir tendre cette dernière entre la bouche d'aspiration (8 ; 13) et la bobine croisée (2) et
- un élément de maniement (13 ; 16) de fil est prévu afin de pouvoir déplacer le fil (6) tendu vers un groupe (9) de la machine textile en vue du traitement ultérieur,
**caractérisé en ce que**
- la bouche d'aspiration (13) est déplacée linéairement par rapport à la buse d'aspiration (12) et
- **en ce que** la buse d'aspiration (12) est disposée de manière essentiellement stationnaire au poste de bobinage (1) et directement en amont de la bobine croisée (2).

9. Poste de bobinage selon la revendication précédente, **caractérisé en ce que** la bouche d'aspiration (13) et/ou le porte-bobine (3) est/sont déplaçable(s) entre une première position pour aspirer l'extrémité (10) de fil et une seconde position pour tendre l'extrémité (10) de fil entre la bobine croisée (2) et la bouche d'aspiration (13) et/ou que la bouche d'aspiration (13) peut être déplacée dans une position de stationnement.

10. Poste de bobinage selon l'une quelconque ou plusieurs des revendications 8 à 9 précédentes, **caractérisé en ce que** l'élément de maniement (13 ; 16) de fil pour déplacer le fil (6) vers le groupe (9) est un attrape-fil (16) et/ou la bouche d'aspiration (13).

11. Poste de bobinage selon l'une quelconque ou plusieurs des revendications 8 à 10 précédentes, **caractérisé en ce que** la bobine croisée (2) peut être soulevée pour tendre le fil (6) entre la bobine croisée (2) et la bouche d'aspiration (13).
